Europäisches Patentamt

European Patent Office

Office européen des brevets

(11) Numéro de publication: **0 267 122 B1**

(12) **FASCICULE DE BREVET EUROPEEN**

(45) Date de publication de fascicule du brevet: **29.07.92**  (51) Int. Cl.5: **H01F 1/37, C09K 19/02**

(21) Numéro de dépôt: **87402501.8**

(22) Date de dépôt: **05.11.87**

---

(54) Procédé de fabrication d'une composition et notamment d'un cristal liquide ferromagnétique, cristal liquide obtenu par ce procédé et dispositif utilisant ce cristal liquide.

---

(30) Priorité: **07.11.86 FR 8615593**

(43) Date de publication de la demande:
**11.05.88 Bulletin 88/19**

(45) Mention de la délivrance du brevet:
**29.07.92 Bulletin 92/31**

(84) Etats contractants désignés:
**BE CH DE ES GB GR IT LI NL**

(56) Documents cités:
DE-A- 2 215 263      FR-A- 2 316 642
FR-A- 2 462 725      US-A- 3 764 540
US-A- 4 019 994      US-A- 4 285 819

CHEMICAL ABSTRACTS, vol. 95, no. 13, décembre 1981, page 762, résumé no. 230993s, Columbus, Ohio, US; & SU-A-861 321 ("KRISTALL" EXPERIMENTAL CONSTRUCTION-TECHNOLOGICAL BUREAU; LENINGRAD TECHNOLOGICAL INSTITUTE) 07-09-1981

CHEMICAL ABSTRACTS, vol. 90, no.22, 28 mai 1979, page 736, résumé no. 179279f, Columbus, Ohio, US; & SU-A-649 657 (ALL-UNION SCIENTIFIC-RESEARCH AND

DESIGN INSTITUTE FOR THE PROCESSING OF GAS) 28-02-1979

CHEMICAL ABSTRACTS, vol. 87, no. 26, 26 décembre 1977, page 580, résumé no. 210360q, Columbus, Ohio, US; & JP-A-77 69 876 (MIYAZAKI, MASAYOSHI) 10-06-1977

(73) Titulaire: **COMMISSARIAT A L'ENERGIE ATO-MIOUE Etablissement de Caractère Scientifi-que Technique et Industriel**
**31/33, rue de la Fédération**
**F-75015 Paris(FR)**

(72) Inventeur: **Tabony, James**
**4 Bis, Résidence du Parc Rue des Casseaux**
**F-91140 Villebon Sur Yvette(FR)**

(74) Mandataire: **Mongrédien, André et al**
**c/o BREVATOME 25, rue de Ponthieu**
**F-75008 Paris(FR)**

---

Rank Xerox (UK) Business Services

EP 0 267 122 B1

## Description

La présente invention a pour objet un procédé de fabrication d'une composition ferromagnétique liquide qui peut être un ferrofluide ou un cristal liquide ferromagnétique.

Elle s'applique en particulier dans tout dispositif optique utilisant un cristal liquide, tel qu'un convertisseur d'images, un dispositif d'affichage de caractères alpha-numériques ou d'images plus complexes commandable électriquement ou magnétiquement, dans des dispositifs à bulles magnétiques tels que les mémoires à bulles, dans les microcircuits magnétiques et les clés magnétiques, dans des dispositifs de mesure de champs magnétiques faibles, etc.

De façon plus précise, l'invention a notamment pour objet un procédé de fabrication d'une micro-émulsion ferromagnétique. Une micro-émulsion est une solution homogène et stable de deux liquides non miscibles tels que l'eau et l'huile dans laquelle l'eau ou l'huile se présente sous forme extrêmement divisée et en particulier sous forme de gouttelettes d'une taille comprise entre 1 et 100 nm. Un agent tensio-actif assure la dispersion de l'eau dans l'huile ou de l'huile dans l'eau.

Les procédés actuellement connus pour fabriquer des liquides anisotropes ferromagnétiques consistent à ajouter à des liquides anisotropes des particules ferromagnétiques finement divisées, la dimension de ces particules étant généralement comprise entre 10 et 500 nm.

Comme procédés de fabrication des liquides anisotropes ferromagnétiques, on peut citer en particulier ceux décrits dans les brevets britanniques 1 361 004 et 1 391 285.

Ces procédés ne permettent d'obtenir qu'une quantité relativement faible de particules ferromagnétiques présente dans le liquide anisotrope.

Les procédés actuellement connus notamment pour fabriquer des ferrofluides conduisent à des compositions ferromagnétiques coûteuses compte tenu des traitements (broyage, tamisage,...) et appareils coûteux nécessaires pour fabriquer des particules de petite taille. Par ailleurs, ils ne permettent pas la fabrication de cristaux liquides ayant des propriétés ferromagnétiques intrinsèques.

Les compositions actuellement connues ayant à la fois des propriétés de cristaux liquides ainsi que des propriétés ferromagnétiques sont notamment des compositions formées d'un mélange d'eau, de molécules amphiphiles et d'au moins un composé choisi dans le groupe comprenant les alcools et les sels minéraux des métaux alcalins et dans lesquelles sont dispersées des particules ferromagnétiques.

Une telle composition est notamment décrite dans le document FR-A-2 462 725.

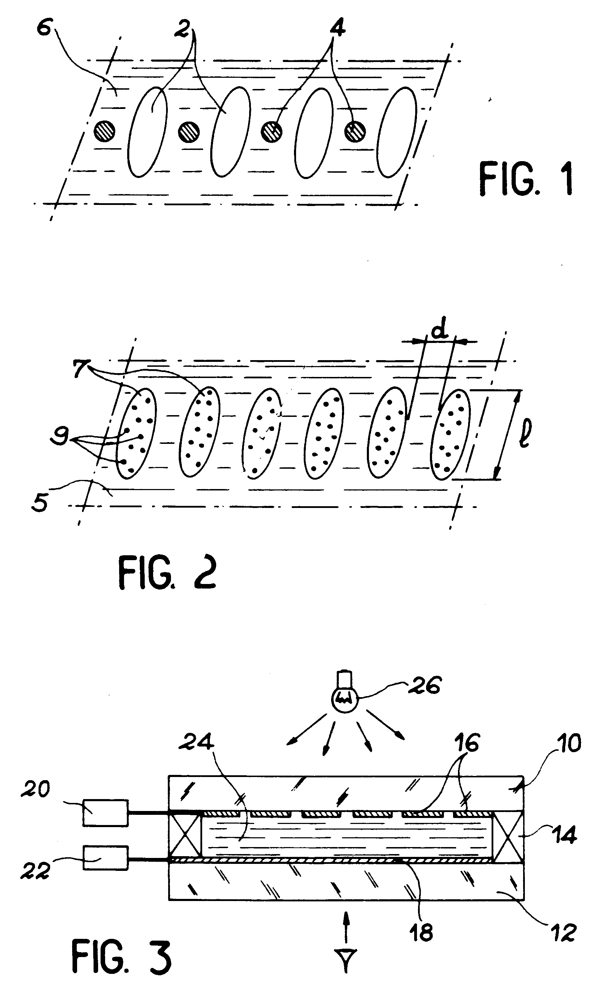

Sur la figure 1, on a représenté schématiquement la structure d'une composition ferromagnétique selon l'art antérieur.

Comme le montre la figure 1, les constituants de la composition sont regroupés en agrégats 2 ayant la forme de cylindres allongés ou aplatis qui peuvent être orientés par un traitement en surface ou sous l'action d'un champ magnétique extérieur. La présence des particules ferromagnétiques 4 réparties entre les agrégats 2, dans la phase liquide continue 6, permet de faciliter l'orientation des agrégats 2 sous l'effet d'un couplage des particules ferromagnétiques 4 et de ces agrégats.

Etant donné que les particules ferromagnétiques 4 sont situées dans la phase continue 6, entre les agrégats 2, ces compositions ne sont pas à proprement parler des cristaux liquides ferromagnétiques.

Pour fabriquer des cristaux liquides ferromagnétiques, on peut penser, dans un premier temps, ajouter à des cristaux liquides connus une certaine quantité de liquide ferromagnétique ou ferrofluide obtenue par les procédés de l'art antérieur. Malheureusement, ce procédé présente un sérieux inconvénient. En effet, l'addition d'une quantité de liquide ferromagnétique supérieure à 2% en volume détruit les propriétés cristal liquide de la composition, ce qui n'offre pas beaucoup d'intérêt.

La présente invention a justement pour objet un procédé de fabrication d'une composition ferromagnétique permettant de remédier aux inconvénients ci-dessus. En particulier, ce procédé est relativement simple et il permet l'obtention de particules ferromagnétiques extrêmement fines ainsi que la fabrication de cristaux liquides ayant des propriétés ferromagnétiques intrinsèques. En outre, les produits obtenus sont bon marché.

L'un des objets de l'invention est un procédé de fabrication d'une composition ferromagnétique **tel que défini dans la revendication 1.**

Ce procédé permet l'obtention de particules colloïdales ferromagnétiques dont la quantité en volume peut représenter 50 % et même plus de la composition totale. Il permet donc l'obtention de dispersions à haute densité de particules ferromagnétiques, ce qui est difficilement réalisable avec les procédés de l'art antérieur.

Les compositions ferromagnétiques obtenues présentent alors des propriétés magnétiques plus élevées que celles de l'art antérieur.

Un autre objet de l'invention est un procédé de fabrication d'un cristal liquide ferromagnétique lyotrope, **tel que défini dans la revendication 2.**

Le procédé selon l'invention est relativement simple à mettre en oeuvre et permet la production d'une part de liquide ferromagnétique ou ferrofluide et d'autre part de cristaux liquides ferromagnétiques. La taille des particules ferromagnétiques varie de 1 à 100 nm.

Conformément à l'invention, la phase liquide dispersée peut être un liquide polaire et la phase liquide continue de l'huile. Inversement, la phase dispersée peut être de l'huile et la phase continue un liquide polaire.

De préférence, le liquide polaire utilisé est de l'eau. Toutefois, d'autres liquides polaires tels que l'ammoniac, l'éthylène glycol, le formamide, le glycérol, l'éthanol, un mélange de ces liquides polaires ou une solution aqueuse de ces liquides peuvent être envisagés.

Afin de faire varier les forces ioniques entre l'huile, le liquide polaire et l'agent tensio-actif, un électrolyte peut être ajouté au liquide polaire. Cet électrolyte représente 1 à, 40% en poids du liquide polaire et de préférence 1 à 10% en poids.

Cet électrolyte est en particulier un sel inorganique tel qu'un sel de métaux alcalins comme le chlorure de sodium, le bromure de sodium, le sulfate de sodium, le chlorure de potassium, le bromure de potassium. Cet électrolyte peut aussi être un hydroxyde basique tel que l'hydroxyde d'ammonium. Enfin, il est aussi possible d'utiliser un sel organique tel que $N(CH_3)_4$ Br comme électrolyte.

Conformément à l'invention, tout type d'agents tensio-actifs peut être utilisé, que ces agents soient anioniques, cationiques ou non ioniques. Ces agents tensio-actifs sont en particulier des sels d'acide gras à longue chaîne hydrocarbonée ou fluorocarbonée, des sels d'amine à longue chaîne, des halogénures d'ammonium quaternaire ayant au moins un substituant hydrocarboné à longue chaîne, des alkyles sulfates ou sulfonates d'un métal alcalin, et des phospholipides. De préférence, la chaîne carbonée contient de 5 à 20 atomes de carbone. En outre, la chaîne carbonée peut être saturée ou insaturée.

Comme agent tensio-actif à chaîne carbonée saturée, on peut citer le dodécylsulfate de sodium et le bromure de tétradécyl triméthylammonium.

Comme agent tensio-actif à chaîne carbonée insaturée, on peut citer l'oléate de potassium.

Il est aussi possible d'utiliser des composés à chaîne multiple comme par exemple le bis(2-éthylhexyl)sulfosuccinate de sodium connus sous l'abréviation A.O.T.

Il est aussi possible d'utiliser des savons du commerce et des huiles de pétrole sulfonées telles que l'hexylbenzosulfonate de sodium.

L'oléate de potassium, l'A.O.T. et les huiles de pétrole sulfonées sont de très bons agents tensio-actifs ayant l'avantage d'être produits industriellement en grande quantité à un très faible prix.

A l'exception de certains agents tensio-actifs, tels que l'A.O.T. qui jouent à la fois le rôle d'agent tensio-actif et d'agent co-tensio-actif, il est nécessaire d'associer à l'agent tensio-actif un agent co-tensio-actif.

Les agents co-tensio-actifs utilisables dans l'invention sont les alcools mono ou polyhydroxylés, les amines, les amino-alcools, les acides carboxyliques et les éthers mono ou polyfonctionnels, ces composés présentant une courte chaîne carbonée, ou bien un mélange de ceux-ci. La longueur de la chaîne carbonée contient en particulier de 1 à 20 atomes de carbone.

De préférence, on utilise comme agents co-tensio-actifs un mono-alcool tel que l'éthanol, le butanol, le pentanol, l'hexanol, l'heptanol, l'octanol, le décanol ou un mélange de ceux-ci. De façon avantageuse, on utilise le butanol, le pentanol ou l'hexanol.

Les alcools qui sont des liquides polaires peuvent jouer à la fois le rôle d'agent co-tensio-actif et celui de liquide polaire selon l'invention.

Conformément à l'invention, l'huile utilisée est un hydrocarbure cyclique, saturé ou insaturé ainsi que les dérivés fluorés de ces hydrocarbures. La chaîne carbonée de ces hydrocarbures contient de 5 à 30 atomes de carbone.

De préférence, on utilise comme hydrocarbure un alcane ou un dérivé aromatique. Par exemple on peut utiliser le benzène, le toluène, le cyclohexane, l'octane et le décane.

Conformément à l'invention, les particules ferromagnétiques formées in situ, dans le liquide dispersé sont en particulier des particules de fer, de cobalt, de bioxyde de chrome, de nickel, d'oxyde ferrique, de magnétite ou d'oxyde de cobalt. De préférence, les particules ferromagnétiques sont des particules de magnétite ($Fe_3O_4$).

La fabrication in situ des particules de magnétite peut être réalisée de façon simple par réduction d'ions ferreux et ferriques en présence d'un hydroxyde basique tel que l'hydroxyde d'ammonium. Dans ce cas particulier, l'hydroxyde d'ammonium sert aussi d'électrolyte.

Les particules de fer et de cobalt peuvent être formées par décomposition par chauffage ou par rayonnement ultraviolet des composés carbonylés correspondants, ces composés étant dissous dans un solvant tel que le toluène. Ce dernier peut alors constituer l'huile de la micro-émulsion selon l'invention.

Les huiles, les agents tensio-actifs et co-tensio-actifs, les particules ferromagnétiques citées précédemment ainsi que l'eau sont des composés que l'on trouve facilement dans le commerce et à bas prix. De tels constituants permettent donc l'obtention de ferrofluide et de cristaux liquides ferromagnétiques peu onéreux.

Le procédé selon l'invention permet l'obtention de cristaux liquides lyotropes ayant des propriétés intrinsèques ferromagnétiques. De tels cristaux liquides n'existent pas actuellement.

L'invention a donc encore pour objet un cristal liquide ferromagnétique lyotrope contenant :

- 1% à 90% en poids d'agent tensio-actif,
- 1% à 90% en poids d'agent co-tensio-actif,
- 1% à 97% en poids d'huile, et
- 1% à 97% en poids d'un liquide polaire,

le rapport masse d'agent co-tensio-actif sur masse d'agent tensio-actif étant inférieur à 2 et les quatre constituants formant des agrégats de forme allongée, dispersés dans une phase liquide continue, dont la longueur est supérieure à la distance séparant deux agrégats consécutifs, ces agrégats renfermant des particules ferromagnétiques.

Les agrégats peuvent présenter la forme de plaques, de tiges, d'ellipsoïdes ou de cylindres allongés dont la longueur varie de 3 à plus de 300 nm.

Selon l'invention, la distance séparant deux agrégats consécutifs est comprise entre 2 et 200 nm. De préférence, cette distance varie de 4 à 20 nm.

L'utilisation de cristaux liquides ferromagnétiques selon l'invention permet, par rapport à des cristaux liquides n'ayant pas les propriétés ferromagnétiques, d'augmenter la biréfringence optique et l'anisotropie magnétique et diélectrique des cristaux liquides, ce qui est très intéressant dans le domaine des dispositifs d'affichage à cristaux liquides notamment commandés électriquement.

En particulier, les champs électriques nécessaires à la modification de l'orientation des agrégats sont beaucoup plus faibles.

Les cristaux liquides selon l'invention peuvent aussi être utilisés dans des dispositifs optiques, notamment d'affichage, commandés magnétiquement. Etant donné que la quantité de particules ferromagnétiques peut être supérieure à 50% en volume de la composition totale, les champs magnétiques nécessaires à l'orientation des agrégats sont beaucoup plus faibles que ceux utilisés dans les cristaux liquides auxquels on a ajouté des particules ferromagnétiques comme dans le document FR-A-2 462 725.

Les cristaux liquides ferromagnétiques selon l'invention sont parfaitement adaptés à l'affichage aussi bien de type alphanumérique que matriciel, du fait qu'ils présentent une viscosité relativement faible. Leur viscosité est comprise entre $10^{-4}$ Pa.s (0,1) et $10^{-1}$ Pa.s (100) centipoises et de préférence comprise entre 1 et 30 centipoisises.

En effet, leur faible viscosité permet d'orienter facilement les agrégats selon une direction voulue.

Les cristaux liquides de l'invention présentent en outre un bon effet mémoire, contrairement à un grand nombre de cristaux liquides connus, évitant de trop nombreux rafraîchissements. En effet, ils restent longtemps orientés, même après suppression de l'excitation électrique ou magnétique.

Les cristaux liquides ferromagnétiques de l'invention peuvent être utilisés dans tous les dispositifs à cristaux liquides actuellement connus.

L'huile, le liquide polaire contenant éventuellement un électrolyte, les agents tensio-actifs et co-tensio-actifs ainsi que les particules ferromagnétiques des cristaux liquides selon l'invention sont en particulier ceux décrits précédemment.

De façon avantageuse, les cristaux liquides selon l'invention contiennent :

- 1% à 45% en poids d'agent tensio-actif et de préférence 5% à 20% en poids,
- 1% à 45% en poids d'agent co-tensio-actif et de préférence 1% à 20% en poids,
- 1% à 97% en poids d'huile et de préférence 1% à 93% en poids, et
- 1% à 97% en poids de liquide polaire et de préférence 1% à 93% en poids.

Dans le cas de cristaux liquides ferromagnétiques selon l'invention dont on veut commander l'orientation des agrégats par l'application d'un champ électrique, il est nécessaire, dans le cas où le liquide polaire est de l'eau, que la quantité en volume de ces derniers soit inférieure à 50% en vue d'éviter l'électrolyse de ce dernier et donc la destruction des propriétés du cristal liquide.

Conformément à l'invention, les cristaux liquides ferromagnétiques commandables électriquement sont en particulier ceux contenant :

- 1% à 45% en poids d'agent tensio-actif et de préférence 5 à 20% en poids,
- 1% à 45% en poids d'agent co-tensio-actif et de préférence 1 à 20% en poids,
- 50% à 97% en poids d'huile et de préférence 50 à 93% en poids, et
- 1% à 48% en poids d'eau et de préférence 1 à 44% en poids.

Les cristaux liquides ferromagnétiques selon l'invention sont généralement utilisables à température ambiante. Toutefois, en cas d'un cristal liquide trop visqueux, ce dernier peut être chauffé à une température de 10 à 15° au-dessus de la température ambiante.

Lors de l'utilisation des cristaux liquides selon l'invention dans des régions froides du globe terrestre, ces cristaux liquides peuvent contenir de l'anti-gel. L'anti-gel utilisable est en particulier l'éthylène glycol.

Dans un dispositif commandable électriquement, utilisant un cristal liquide ferromagnétique selon l'invention, il est possible de faciliter la commande électrique de ce cristal liquide en introduisant une molécule de préférence linéaire et/ou fortement chargée électriquement telle que les polypeptides, les polyélectrolytes et les polysaccharides.

Il est aussi possible d'ajouter aux cristaux liquides selon l'invention des molécules optiquement actives telles que de la brucine, du cholestérol ou leurs dérivés afin que les cristaux liquides présentent une phase cholestérique.

Ces additifs représentent moins de 50% en poids de la composition et de préférence moins de 10%.

En vue de simplifier les dispositifs optiques à cristaux liquides actuellement connus ainsi que leur commande, par suppression des polariseurs croisés généralement utilisés de part et d'autre du film de cristal liquide, des colorants dichroïques peuvent être introduites dans le cristal liquide selon l'invention.

Bien que les cristaux liquides ferromagnétiques selon l'invention soient parfaitement adaptés au dispositif d'affichage actuellement connu, ces cristaux liquides peuvent être utilisés dans tous les domaines utilisant généralement des cristaux liquides.

La description se réfère aux figures annexées dans lesquelles :

- la figure 1, déjà décrite, représente schématiquement la structure d'une composition ferromagnétique selon l'art antérieur,
- la figure 2 représente schématiquement la structure d'un cristal liquide ferromagnétique selon l'invention, et
- la figure 3 représente schématiquement un dispositif d'affichage renfermant un cristal liquide ferromagnétique selon l'invention.

En se référant à la figure 2, les cristaux liquides ferromagnétiques comportent une phase liquide continue 5 qui est de l'eau ou de l'huile renfermant des agrégats 7 respectivement d'huile ou d'eau. Ces agrégats de forme allongée ont une longueur l de 3 à plus de 300 nm et sont séparés d'une distance d de 2 à 300 nm inférieure à leur longueur l. La dispersion des agrégats est assurée par un agent tensio-actif et un agent co-tensio-actif.

Selon l'invention, les agrégats 7 renferment des particules ferromagnétiques 9 notamment de magnétite conférant à ces cristaux liquides la propriété ferromagnétique.

Ces cristaux liquides ferromagnétiques peuvent être utilisés dans un dispositif d'affichage commandé électriquement, tel que représenté sur la figure 3.

Ce dispositif comprend une cellule étanche formée de deux parois isolantes transparentes respectivement 10 et 12, disposées en regard l'une de l'autre et réalisées notamment en verre. Un joint étanche 14 permet de maintenir solidaires les parois 10 et 12 sur leurs bords.

Un dépôt métallique 16 transparent, par exemple en oxyde d'étain, est disposé sur la face interne de la paroi isolante 10. Ce dépôt métallique 16 jouant le rôle d'électrode possède une structure appropriée à l'affichage (matrice de points, segments, etc.). En outre, la face interne de la paroi 12 est revêtue d'un dépôt métallique 18 transparent, par exemple en oxyde d'étain, jouant le rôle de contre-électrode.

Des circuits de commande et d'alimentation 20 et 22 reliés respectivement aux dépôts conducteurs 16 et 18 permettent d'appliquer aux bornes du cristal liquide ferromagnétique 24, contenu dans la cellule étanche, des tensions appropriées à l'excitation électrique du cristal liquide. Ce cristal liquide 24 contient des colorants dichroïques.

Une lampe 26 située du côté opposé à l'observation parfait le dispositif.

Les circuits de commande et d'alimentation du dispositif sont ceux généralement utilisés dans ce domaine.

Les cristaux liquides ferromagnétiques de l'invention présentent une biréfringence optique qui peut être modifiée sous l'effet d'un champ électrique ; initialement, avant l'application d'un champ électrique les agrégats de ces cristaux liquides ont une distribution d'orientation aléatoire ; l'application d'un champ électrique permet d'orienter ces agrégats dans une même direction.

A titre d'exemple illustratif et non limitatif, on donne ci-après deux exemples de mise en oeuvre du procédé selon l'invention.

## EXEMPLE 1

30 g d'oléate de potassium (agent tensio-actif) sont dissous dans 100 ml de dodécane (huile) et 40 ml d'hexanol (agent co-tensio-actif). A 10 ml de la solution ainsi obtenue, on ajoute 1 ml d'une solution aqueuse de $FeCl_2$ 1,7 molaire et 1 ml d'une solution aqueuse de $FeCl_3$ 1,7 molaire.

On ajoute 7 ml d'hydroxyde d'ammonium 12M à la solution obtenue puis on mélange cette dernière vigoureusement pendant environ 5 minutes. Une période de plusieurs heures est alors nécessaire pour que la réaction chimique soit complète. Le mélange obtenu est séparé en deux phases, une phase ferrofluide supérieure et une phase aqueuse inférieure.

La phase ferrofluide est alors éliminée par décantation. Elle contient une haute densité de particules colloïdales ferromagnétiques et peut être fortement magnétisable.

Dans cet exemple, la réaction des ions ferriques et ferreux avec l'hydroxyde d'ammonium a permis la fabrication in situ de particules de magnétique ($Fe_3O_4$), ces particules étant présentes dans le liquide dispersé constitué alors par de l'eau.

## EXEMPLE 2

On forme une première solution par dissolution de 0,3 g de bromure de tétradécyltriméthylammonium (agent tensio-actif) dans 2 ml de cyclohexane (huile) et 0,05 ml de pentanol (agent co-tensio-actif). Au mélange obtenu on ajoute 0,2 ml d'une solution aqueuse de FeCl$_3$ 1,7 molaire. Le mélange est alors agité pendant quelques secondes jusqu'à ce que la phase aqueuse soit dispersée dans le cyclohexane.

Parallèlement, on prépare une seconde solution contenant les mêmes proportions de cyclohexane, de pentanol et de bromure de tétradécyltriméthylammonium à laquelle est ajouté 0,2ml d'une solution aqueuse de FeCl$_2$ 1,7 molaire à la place de la solution de FeCl$_3$.

Enfin, on prépare une troisième solution contenant 1,8g de bromure de tétradécyltriméthylammonium, 12 ml de cyclohexane, 0,3 ml de pentanol et 1,2 ml d'hydroxyde d'ammonium 12M.

Les trois solutions ci-dessus sont alors mélangées. La réaction chimique qui est complète après quelques minutes conduit à un cristal liquide ferromagnétique de couleur marron présentant des propriétés de biréfringence optique très supérieures à celles d'une composition similaire ne contenant pas de particules ferromagnétiques dans la phase dispersée, ici l'eau.

En plus des dispositifs à cristaux liquides actuellement connus, les cristaux liquides ferromagnétiques de l'invention peuvent être utilisés dans des mémoires à bulles, la phase dispersée représentant les motifs de propagation des bulles magnétiques.

## Revendications

1. Procédé de fabrication d'une composition ferromagnétique consistant essentiellement à former une microémulsion par dispersion d'une première phase liquide renfermant au moins un premier composé dans une seconde phase, en présence d'un agent tensio-actif et d'un agent co-tensio-actif, ladite émulsion comportant des agrégats de première phase dispersés dans la seconde phase, puis à faire réagir chimiquement in situ le premier composé avec un second composé soluble dans la première phase ou à décomposer in situ le premier composé par chauffage ou irradiation pour former in situ dans les agrégats de première phase liquide (7) des particules ferromagnétiques (9).

2. Procédé selon la revendication 1 de fabrication d'un cristal liquide ferromagnétique lyotrope, caractérisé en ce que le rapport masse d'agent co-tensio-actif sur masse d'agent tensio-actif est choisi inférieur à 2.

3. Procédé selon la revendication 1 ou 2, caractérisé en ce que la première phase dispersée (7) est un liquide polaire et la seconde phase continue (5) de l'huile.

4. Procédé selon la revendication 1 ou 2, caractérisé en ce que la première phase dispersée (7) est de l'huile et la seconde phase continue (5) un liquide polaire.

5. Procédé selon la revendication 3 ou 4, caractérisé en ce que le liquide polaire contient un électrolyte.

6. Procédé selon la revendication 5, caractérisé en ce que l'électrolyte est choisi parmi un hydroxyde basique ou un sel inorganique.

7. Procédé selon l'une quelconque des revendications 3 à 6, caractérisé en ce que le liquide polaire est de l'eau.

8. Procédé selon l'une quelconque des revendications 3 à 7, caractérisé en ce que l'huile est un hydrocarbure choisi parmi les hydrocarbures saturés, le hydrocarbures insaturés et les hydrocarbures cycliques.

9. Procédé selon l'une quelconque des revendications 3 à 8, caractérisé en ce que l'huile est un hydrocarbure choisi parmi le benzène, le toluène, le cyclohexane, l'octane, le décane, un dérivé de ces hydrocarbures ou un mélange de ces hydrocarbures.

10. Procédé selon l'une quelconque des revendications 1 à 9, caractérisé en ce que l'agent tensio-actif est choisi dans le groupe comprenant les sels d'acide gras à longue chaîne hydrocarbonée ou fluorocarbonée, les halogénures d'ammonium quaternaire et les alkyles sulfates d'un métal alcalin.

11. Procédé selon l'une quelconque des revendications 1 à 10, caractérisé en ce que l'agent tensio-actif est choisi parmi le bromure de tétradécyltriméthylammonium et l'oléate de potassium.

12. Procédé selon l'une quelconque des revendications 1 à 11, caractérisé en ce que l'agent co-tensio-actif est formé d'au moins un alcool.

13. Procédé selon l'une quelconque de revendications 1 à 12, caractérisé en ce que l'agent co-tensio-actif est choisi parmi le butanol, le pentanol et l'hexanol.

**14.** Procédé selon l'une quelconque des revendications 1 à 13, caractérisé en ce que l'huile est le docécane, le liquide polaire est l'eau, l'agent co-tensio-actif est l'hexanol et l'agent tensio-actif est l'oléate de potassium.

**15.** Procédé selon l'une quelconque des revendications 1 à 14, caractérisé en ce que l'huile est du cyclohexane, le liquide polaire est de l'eau, l'agent co-tensio-actif est du pentanol et l'agent tensio-actif est du bromure de tétradécyltriméthylammonium.

**16.** Procédé selon l'une quelconque des revendications 1 à 15, caractérisé en ce que l'on fait réagir chimiquement des ions ferreux et des ions ferriques en présence d'un hydroxyde basique.

**17.** Procédé selon la revendication 16, caractérisé en ce que l'hydroxyde basique est l'hydroxyde d'ammonium.

**18.** Cristal liquide ferromagnétique lyotrope obtenu par le procédé selon l'une quelconque des revendications 2 à 17, caractérisé en ce qu'il contient :
- 1 % à 90 % en poids d'agent tensio-actif,
- 1 % à 90 % en poids d'agent co-tensio-actif,
- 1 % à 97 % en poids d'huile, et
- 1 % à 97 % en poids d'un liquide polaire,

le rapport masse d'agent co-tensio-actif sur masse d'agent tensio-actif étant inférieur à 2 et les quatre constituants formant des agrégats (7) de forme allongée, dispersés dans une phase liquide continue (5), dont la longueur (l) est supérieure à la distance (d) séparant deux agrégats (7) consécutifs, ces agrégats renfermant des particules ferromagnétiques (9).

**19.** Cristal liquide selon la revendication 18, caractérisé en ce que la distance (d) séparant deux agrégats (7) consécutifs est comprise entre 2 et 200 nm.

**20.** Cristal liquide selon la revendication 18 ou 19, caractérisé en ce qu'il contient :
- 5 % à 20 % en poids d'agent tensio-actif,
- 1 % à 20 % en poids d'agent co-tensio-actif,
- 1 % à 93 % en poids d'huile, et
- 1 % à 93 % en poids de liquide polaire.

**21.** Cristal liquide selon l'une quelconque des revendications 18 à 20, caractérisé en ce qu'il présente une viscosité allant de $10^{-4}$ Pa.s (0,1 centipoise) à $10^{-1}$ Pa.s (100 centipoises).

**22.** Cristal liquide selon l'une quelconque des revendications 18 à 21, caractérisé en ce que les particules ferromagnétiques (9) sont des particules de magnétite ($Fe_3O_4$).

**23.** Cristal liquide selon l'une quelconque des revendications 18 à 22, caractérisé en ce que l'huile est le cyclohexane, le liquide polaire est l'eau, l'agent co-tensio-actif est le pentanol, l'agent tensio-actif est le bromure de tétradécyltriméthylammonium et les particules ferromagnétiques sont du $Fe_3O_4$.

**24.** Cristal liquide selon l'une quelconque des revendications 18 à 23, caractérisé en ce qu'il contient un antigel.

**25.** Cristal liquide selon l'une quelconque des revendications 18 à 24, caractérisé en ce qu'il contient des molécules optiquement actives.

**26.** Cristal liquide selon l'une quelconque des revendications 18 à 25, caractérisé en ce qu'il contient des molécules dichroïques.

**27.** Dispositif optique comportant un cristal liquide présentant deux états optiques stables commandables électriquement ou magnétiquement, caractérisé en ce que le cristal liquide est un cristal liquide selon l'une quelconque des revendications 18 à 26.

**Claims**

**1.** Process for producing a ferromagnetic composition essentially consisting of forming a microemulsion by dispersing a first liquid phase containing at least one first compound in a second phase, in the presence of a surfactant and a co-surfactant, said emulsion incorporating aggregates of the first phase dispersed in the second phase, followed by chemically reacting in situ the first compound with a second compound soluble in the first phase or decomposing in situ the first compound by heating or irradiation for the formation in situ in the aggregates of the first liquid phase (7) ferromagnetic particles (9).

**2.** Process according to claim 1 for producing a lyotropic ferromagnetic liquid crystal, characterized in that the weight ratio of the co-surfactant to the surfactant is below 2.

**3.** Process according to claims 1 or 2, characterized in that the first dispersed phase (7) is a polar liquid and the second continuous phase (5) is oil.

**4.** Process according to claims 1 or 2, characterized in that the first dispersed phase (7) is oil and the second continuous phase (5) a polar liquid.

**5.** Process according to claims 3 or 4, characterized in that the polar liquid contains an electrolyte.

**6.** Process according to claim 5, characterized in that the electrolyte is chosen from among a basic hydroxide or an inorganic salt.

**7.** Process according to any one of the claims 3 to 6, characterized in that the polar liquid is water.

**8.** Process according to any one of the claims 3 to 7, characterized in that the oil is a hydrocarbon chosen from among saturated hydrocarbons, unsaturated hydrocarbons and cyclic hydrocarbons.

**9.** Process according to any one of the claims 3 to 8, characterized in that the oil is a hydrocarbon chosen from among benzene, toluene, cyclohexane, octane, decane, a derivative of these hydrocarbons or a mixture of these hydrocarbons.

**10.** Process according to any one of the claims 1 to 9, characterized in that the surfactant is chosen from within the group having fatty acid salts with a long hydrocarbon or fluorocarbon chain, quaternary ammonium halides and alkali metal alkyl sulphates.

**11.** Process according to any one of the claims 1 to 10, characterized in that the surfactant is chosen from among tetradecyl trimethyl ammonium bromide and potassium oleate.

**12.** Process according to any one of the claims 1 to 11, characterized in that the co-surfactant is formed by at least one alcohol.

**13.** Process according to any one of the claims 1 to 12, characterized in that the co-surfactant is chosen from among butanol, pentanol and hexanol.

**14.** Process according to any one of the claims 1 to 13, characterized in that the oil is dodecane, the polar liquid is water, the co-surfactant is hexanol and the surfactant is potassium oleate.

**15.** Process according to any one of the claims 1 to 14, characterized in that the oil is cyclohexane, the polar liquid is water, the co-surfactant is pentanol and the surfactant is tetradecyl trimethyl ammonium bromide.

**16.** Process according to any one of the claims 1 to 15, characterized in that ferrous ions and ferric ions are chemically reacted in the presence of a basic hydroxide.

**17.** Process according to claim 16, characterized in that the basic hydroxide is ammonium hydroxide.

**18.** Lyotropic ferromagnetic liquid crystal obtained by the process according to any one of the claims 2 to 17, characterized in that it contains 1 to 90% by weight surfactant, 1 to 90% by weight co-surfactant, 1 to 97% by weight oil and 1 to 97% by weight polar liquid, the weight ratio of the co-surfactant to the surfactant being below 2 and the four constituents forming elongated aggregates (7) dispersed in a continuous liquid phase (5), whose length (1) exceeds the distance (d) separating two consecutive aggregates (7), said aggregates containing ferromagnetic particles (9).

**19.** Liquid crystal according to claim 18, characterized in that the distance (d) separating two consecutive aggregates (7) is between 2 and 200 nm.

**20.** Liquid crystal according to claims 18 or 19, characterized in that it contains 5 to 20% by weight surfactant, 1 to 20% by weight co-surfactant, 1 to 93% by weight oil and 1 to 93% by weight polar liquid.

**21.** Liquid crystal according to any one of the claims 18 to 20, characterized in that it has a viscosity from $10^{-4}$ Pa.s (0.1 centipoise) to $10^{-1}$ Pa.s (100 centipoises).

**22.** Liquid crystal according to any one of the claims 18 to 21, characterized in that the ferromagnetic particles (9) are magnetite particles ($Fe_3O_4$).

**23.** Liquid crystal according to any one of the claims 18 to 22, characterized in that the oil is cyclohexane, the polar liquid is water, the co-surfactant is pentanol, the surfactant is tetradecyl trimethyl ammonium bromide and the ferromagnetic particles are of $Fe_3O_4$.

24. Liquid crystal according to any one of the claims 18 to 23, characterized in that it contains an antifreeze.

25. Liquid crystal according to any one of the claims 18 to 24, characterized in that it contains optically active molecules.

26. Liquid crystal according to any one of the claims 18 to 25, characterized in that it contains dichroic molecules.

27. Optical apparatus incorporating a liquid crystal having two electrically or magnetically controllable stable optical states, characterized in that the liquid crystal is a liquid crystal according to any one of the claims 18 to 26.

**Patentansprüche**

1. Verfahren zur Herstellung einer ferromagnetischen Zusammensetzung, im wesentlichen bestehend aus dem Bilden einer Mikroemulsion durch Dispergieren einer ersten flüssigen Phase, welche wenigstens eine erste Verbindung in einer zweiten Phase enthält, in Anwesenheit eines oberflächenaktiven Mittels und eines Co-Tensides, wobei die Emulsion in der zweiten Phase dispergierte Aggregate der ersten Phase beinhaltet, darauf dem chemischen Reagierenlassen der ersten Verbindung in situ mit einer zweiten, in der ersten Phase löslichen Verbindung oder dem Zersetzen der ersten Verbindung in situ durch Erhitzen oder Bestrahlen, um in situ in den Aggregaten der ersten flüssigen Phase (7) ferromagnetische Teilchen (9) zu bilden.

2. Verfahren gemäß Anspruch 1 zur Herstellung eines ferromagnetischen, lyotropen Flüssigkristalls, dadurch gekennzeichnet, daß das Verhältnis der Masse des Co-Tensides zur Masse des oberflächenaktiven Mittels kleiner als 2 gewählt ist.

3. Verfahren gemäß Anspruch 1 oder 2, dadurch gekennzeichnet, daß die erste dispergierte Phase (7) eine polare Flüssigkeit ist und die zweite kontinuierliche Phase (5) ein Öl ist.

4. Verfahren gemäß Anspruch 1 oder 2, dadurch gekennzeichnet, daß die erste dispergierte Phase (7) ein Öl ist und die zweite kontinuierliche Phase (5) eine polare Flüssigkeit ist.

5. Verfahren gemäß Anspruch 3 oder 4, dadurch gekennzeichnet, daß die polare Flüssigkeit einen Elektrolyten enthält.

6. Verfahren gemäß Anspruch 5, dadurch gekennzeichnet, daß der Elektrolyt aus einem basischen Hydroxid oder einem anorganischen Salz ausgewählt ist.

7. Verfahren gemäß einem der Ansprüche 3 bis 6, dadurch gekennzeichnet, daß die polare Flüssigkeit Wasser ist.

8. Verfahren gemäß einem der Ansprüche 3 bis 7, dadurch gekennzeichnet, daß das Öl ein aus den gesättigten Kohlenwasserstoffen, den ungesättigten Kohlenwasserstoffen und den cyclischen Kohlenwasserstoffen ausgewählter Kohlenwasserstoff ist.

9. Verfahren gemäß einem der Ansprüche 3 bis 8, dadurch gekennzeichnet, daß das Öl ein aus Benzol, Toluol, Cyclohexan, Octan, Decan, einem Derivat dieser Kohlenwasserstoffe oder einem Gemisch dieser Kohlenwasserstoffe ausgewählter Kohlenwasserstoff ist.

10. Verfahren gemäß einem der Ansprüche 1 bis 9, dadurch gekennzeichnet, daß das oberflächenaktive Mittel aus der die Fettsäure-Salze mit langer Kohlenwasserstoff- oder Fluorkohlenwasserstoffkette, die quaternären Ammoniumhalogenide und die Alkalimetallalkylsulfate umfassenden Gruppe ausgewählt ist.

11. Verfahren gemäß einem der Ansprüche 1 bis 10, dadurch gekennzeichnet, daß das oberflächenaktive Mittel aus Tetradecyltrimethylammoniumbromid und Kaliumoleat ausgewählt ist.

12. Verfahren gemäß einem der Ansprüche 1 bis 11, dadurch gekennzeichnet, daß das Co-Tensid aus wenigstens einem Alkohol gebildet wird.

13. Verfahren gemäß einem der Ansprüche 1 bis 12, dadurch gekennzeichnet, daß das Co-Tensid aus Butanol, Pentanol oder Hexanol ausgewählt ist.

14. Verfahren gemäß einem der Ansprüche 1 bis 13, dadurch gekennzeichnet, daß das Öl Dodecan ist, die polare Flüssigkeit Wasser ist, das Co-Tensid Hexanol ist und das oberflächenaktive Mittel Kaliumoleat ist.

15. Verfahren gemäß einem der Ansprüche 1 bis 14, dadurch gekennzeichnet, daß das Öl Cyclohexan ist, die polare Flüssigkeit Wasser ist, das Co-Tensid Pentanol ist und das oberflächenaktive Mittel Tetradecyltrimethylammoniumbromid ist.

16. Verfahren gemäß einem der Ansprüche 1 bis 15, dadurch gekennzeichnet, daß man Eisen-(II)-Ionen und Eisen(III)-Ionen in Anwesenheit eines basischen Hydroxids chemisch reagieren läßt.

17. Verfahren gemäß Anspruch 16, dadurch gekennzeichnet, daß das basischen Hydroxid Ammoniumhydroxid ist.

18. Ferromagnetischer, lyotroper Flüssigkristall, erhalten nach dem Verfahren gemäß einem der Ansprüche 2 bis 17, dadurch gekennzeichnet, daß er

   - 1 Gew.-% bis 90 Gew.-% oberflächenaktives Mittel,
   - 1 Gew.-% bis 90 Gew.-% Co-Tensid,
   - 1 Gew.-% bis 97 Gew.-% Öl und
   - 1 Gew.-% bis 97 Gew.-% einer polaren Flüssigkeit enthält,

   wobei das Verhältnis der Masse an Co-Tensid zur Masse des oberflächenaktiven Mittels kleiner als 2 ist und die vier Bestandteile in einer flüssigen kontinuierlichen Phase (5) dispergierte Aggregate (7) von länglicher Gestalt bilden, deren Länge (1) größer ist als die zwei aufeinanderfolgende Aggregate (7) trennende Entfernung (d) und wobei diese Aggregate ferromagnetische Teilchen (9) enthalten.

19. Flüssigkristall gemäß Anspruch 18, dadurch gekennzeichnet, daß die zwei aufeinanderfolgende Aggregate (7) trennende Entfernung (d) zwischen 2 und 200 nm enthalten ist.

20. Flüssigkristall gemäß Anspruch 18 oder 19, dadurch gekennzeichnet, daß er

   - 5 Gew.-% bis 20 Gew.-% oberflächenaktives Mittel,
   - 1 Gew.-% bis 20 Gew.-% Co-Tensid,
   - 1 Gew.-% bis 93 Gew.-% Öl und
   - 1 Gew.-% bis 93 Gew.-% Öl einer polaren Flüssigkeit enthält.

21. Flüssigkristall gemäß einem der Ansprüche 18 bis 20, dadurch gekennzeichnet, daß er eine von $10^{-4}$ Pa.s (0,1 Centipoise) bis $10^{-1}$ Pa.s (100 Centipoise) reichende Viskosität aufweist.

22. Flüssigkristall gemäß einem der Ansprüche 18 bis 21, dadurch gekennzeichnet, daß die ferromagnetischen Teilchen (9) Magnetit-Teilchen ($Fe_3O_4$) sind.

23. Flüssigkristall gemäß einem der Ansprüche 18 bis 22, dadurch gekennzeichnet, daß das Öl Cyclohexan ist, die polare Flüssigkeit Wasser ist, das Co-Tensid Pentanol ist, das oberflächenaktive Mittel Tetradecyltrimethylammoniumbromid und die ferromagnetischen Teilchen $Fe_3O_4$ sind.

24. Flüssigkristall gemäß einem der Ansprüche 18 bis 23, dadurch gekennzeichnet, daß er ein Antigel enthält.

25. Flüssigkristall gemäß einem der Ansprüche 18 bis 24, dadurch gekennzeichnet, daß er optisch aktive Moleküle enthält.

26. Flüssigkristall gemäß einem der Ansprüche 18 bis 25, dadurch gekennzeichnet, daß er dichroitische Moleküle enthält.

27. Optische Anordnung, umfassend einen Flüssigkristall, welcher zwei stabile optische, elektrisch oder magnetisch steuerbare Zustände aufweist, dadurch gekennzeichnet, daß der Flüssigkristall ein Flüssigkristall gemäß einem der Ansprüche 18 bis 26 ist.

FIG. 1

FIG. 2

FIG. 3